Europäisches Patentamt

European Patent Office

Office européen des brevets

(11) Publication number: **0 185 626**
**A2**

# (12) EUROPEAN PATENT APPLICATION

(21) Application number: **85830300.1**

(22) Date of filing: **06.12.85**

(51) Int. Cl.⁴: **B 60 R 13/02**

(30) Priority: **21.12.84 IT 6827784**

(43) Date of publication of application:
**25.06.86 Bulletin 86/26**

(84) Designated Contracting States:
**DE FR GB SE**

(71) Applicant: **FIAT AUTO S.p.A.**
**Corso Giovanni Agnelli 200**
**I-10135 Torino(IT)**

(72) Inventor: **Rota, Giovanni**
**Via Della Vittoria 6**
**I-10024 Moncalieri (Torino)(IT)**

(74) Representative: **Buzzi, Franco et al,**
**c/o Jacobacci-Casetta & Perani S.p.A. Via Alfieri, 17**
**I-10121 Torino(IT)**

(54) **Method of forming a lining for internal surfaces of motor-vehicle passenger compartments, and a lining obtained by this method.**

(57) Method of forming a lining for internal surfaces of motor-vehicle passenger compartments, constituted by a backing sheet (1) bonded by a hot-melt adhesive to a finishing material (2) having impressions (3) in its outer surface for ornamental purposes.

The joining of the backing sheet to the finishing material and the formation of said impressions are effected in a single hot-press moulding operation.

FIG. 1

Method of forming a lining for internal surfaces of motor-vehicle passenger compartments, and a lining obtained by this method.

The present invention relates to linings for internal surfaces of motor-vehicle passenger compartments, particularly but not exclusively roofs.

In particular, the invention relates to a method for forming a lining constituted by a backing sheet bonded by hot-melt adhesive to a finishing material having impressions in its external surface for ornamental purposes.

Conventionally, such linings are made by moulding the backing sheet and the coating with its impressions separately in suitable moulds and subsequently glueing the coating to the backing in another hot press.

The object of the present invention is to simplify this process and make it cheaper and this object is achieved by virtue of the fact that the joining of the backing sheet to the finishing material and the formation of the said impressions are achieved in a single hot-press moulding operation.

Thus a single press suffices, in practice, for operations which previously required the use of three separate presses.

Furthermore the method according to the invention allows a lining structure to be obtained which is particularly compact, with recessed profiles, whereof the aesthetic effect is shown in the finishing material.

The invention will now be described in detail with reference to the appended drawings, provided purely by way of nonlimiting example, in which:

Figure 1 is a sectioned perspective view of a lining element according to the invention for internal surfaces of  motor-vehicle passenger compartments, and

Figure 2 is a schematic perspective view illustrating diagrammatically the way in which the lining of Figure 1 is made.

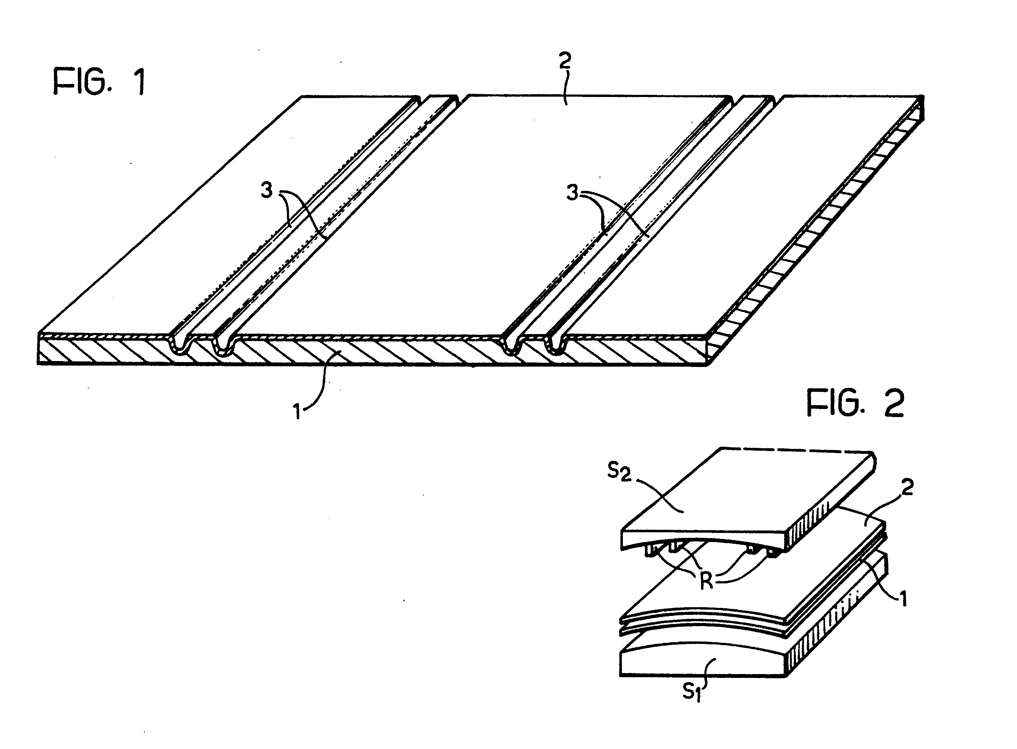

Figure 1 illustrates a lining element for motor-vehicle roofs constituted by a backing sheet 1 having a finishing material 2 attached to one face thereof by a hot-melt adhesive.

The lining has a series of impressions 3, which, in the example illustrated, are constituted by pairs of parallel grooves in the outer face of the finishing material 2 and extending into the backing sheet 1.

It should be noted that the impressions 3 may have shapes and configurations different from that illustrated by way of example. They may extend the entire length and breadth of the lining or they may be shorter in which case the impressions 3 are formed in only part of the finished product.

The backing sheet 1 may be soft or flexible or else self-supporting and rigid. It may be formed from any natural or synthetic material and may be made by any known manufacturing technique.

The finishing material 2 is normally a textile (woven, vinyl laminate, laminate of any natural or synthetic fibres, formed by any manufacturing technique) to the inner face of which a sheet of cellular polyurethane may be flame-bonded or glued to make the lining soft.

The method of making the lining described above involves the joining of the backing sheet 1 to the finishing material 2 and the formation of the impressions 3 by a single hot-press moulding operation. Naturally the face of the backing sheet 1 which is to receive the finishing material 2 will previously have been coated with a hot-melt adhesive, for example by spraying.

Thus, in practice, the manufactured lining is completed in a single moulding operation in a single-mould, illustrated schematically in Figure 2.

This mould comprises essentially a lower, shaped part $S_1$ on which the backing sheet 1 is placed with its surface carrying the glue facing upwardly and, on this surface, the finishing material 2, and an upper part $S_2$ shaped like the lower part $S_1$ and having moulding projections R corresponding to the impressions which it is wished to obtain. Clearly by closing and clamping the two portions $S_1$ and $S_2$ together and simultaneously heating these parts, one achieves the simultaneous glueing of the sheets 1 and 2 and the formation of the impressions 3.

This method is considerably simpler than the conventional methods and consequently allows the manufacturing costs for the lining to be reduced drastically.

Finally it should be noted that the fact that finishing materials of different types may be used allows combinations of different materials, such as for example woven and laminated materials or any other combination of materials previously mentioned, to be applied to the same backing sheet.

0185626

CLAIMS

1. Method of forming a lining for internal surfaces of motor-vehicle passenger compartments, constituted by a backing sheet bonded by a hot-melt adhesive to a finishing material having impressions in its outer surface for ornamental purposes, characterised in that the bonding of the backing sheet (1) to the finishing material (2) and the formation of the said impressions (3) are achieved in a single hot-press moulding operation.

2. Method according to Claim 1, characterised in that the backing sheet is a soft material.

3. Method according to Claim 1, characterised in that the backing sheet is a flexible material.

4. Method according to Claim 1, characterised in that the backing sheet is a self-supporting, rigid material.

5. Method according to Claim 1, characterised in that a layer of soft material, such as cellular polyurethane, is applied to the inner face of the finishing material (2) before its bonding to the support sheet (1).

6. Method according to Claim 1, characterised in that the finishing material is a textile.

7. Method according to Claim 1, characterised in that the finishing material is a vinyl laminate.

8. Method according to Claim 1, characterised in that the finishing material is a laminate of natural or synthetic fibres.

9. Lining for internal surfaces of motor-vehicle passenger compartments made by the method according to one or more of the preceding claims.

0185626

FIG. 1

2

3

3

1

FIG. 2

2

1

$S_1$

$S_2$

R